# EUROPEAN PATENT APPLICATION

(11) **EP 4 502 862 A1**
(43) Date of publication of application: **05.02.2025**
(21) Application number: 23779140.5
(22) Date of filing: 28.02.2023
(51) Int. Cl.: G06F 40/45, G06F 40/55

(54) **TRANSLATION SYSTEM, TRANSLATION DEVICE, AND PROGRAM**

(30) Priority: 28.03.2022 JP 2022052407
(71) Applicant: Bandai Co., Ltd., Tokyo 111-8081 (JP); Heroz, Inc., Tokyo 108-0014 (JP)
(72) Inventor: WATANABE Ryuya, Tokyo 111-0081 (JP); OI Keisuke, Tokyo 108-0014 (JP); KAWASHIMA Kei, Tokyo 108-0014 (JP)
(74) Representative: Studio Torta S.p.A.
(86) International application number: PCT/JP2023/007321
(87) International publication number: WO 2023/189110

(57) **Abstract**

[Problems to be solved] A translation system for performing translation taking the characteristic of a text to be translated is provided.

[Means for solving the problems]

The translation system translate first language original text information shown on a game medium associated with a character, into a second language. The translation system comprises a database which stores two or more first templates including first language first decomposed text information which is obtained by decomposing existing first language original text by the first unit and second language first decomposed text information corresponding the existing first language first decomposed text information, an input unit configured to input the first language original text information to be translated, a translation unit configured to decompose the input first language original text information by the first unit to generate the first language first decomposed text information, to translate the first language first decomposed text information into the second language first decomposed text information using the first template, to combine the second language first decomposed text information, and to generate second language translated text information corresponding to the first language original text information to be translated; and an output control unit configured to output the second language translated text information.

## Description

### TECHNICAL FIELD

The present invention relates to a translation system, a translation apparatus, and a program therefor.

### BACKGROUND

Conventionally, there are translation systems that automatically translate text in a first language into text in a second language (for example, Patent Document 1).

### PRIOR ART

### PATENT DOCUMENTS

[Patent Document 1] Japanese Patent Application Publication No. 62-177665

### SUMMARY

### TECHNICAL PROBLEM

However, it is important to consider the characteristics of a text to be translated in order to perform efficient and accurate translations. Therefore, it is an object of the present invention to provide a translation system, a translation apparatus, and a program therefor that perform a translation, taking into account the characteristics of the text to be translated.

### SOLUTION TO PROBLEM

One of the aspects of the present invention is a translation system, which translates first language original text information, displayed on a game medium associated with a character, into a second language. The translation system comprises a database for storing multiple first templates, which include first language first decomposed text information obtained by decomposing existing first language original text information based on a first unit, and second language first decomposed text information corresponding to the existing first language first decomposed text information. It also includes an input unit for inputting the first language original text information to be translated, and a translation unit for decomposing the input first language original text information based on the first unit to generate the first language first decomposed text information, translating the first language first decomposed text information into second language first decomposed text information using the first template, and combining the second language first decomposed text information to generate translated second language text information corresponding to the first language original text information to be translated, and an output control unit for outputting translated second language text information.

Another aspect of the present invention is a translation apparatus, which translates first language original text information, displayed on a game medium associated with a character, into a second language. The translation apparatus comprises a database for storing multiple first templates, which include first language first decomposed text information obtained by decomposing existing first language original text information based on a first unit, and second language first decomposed text information corresponding to the existing first language first decomposed text information. It also includes an input unit for inputting the first language original text information to be translated, and a translation unit for decomposing the input first language original text information based on the first unit to generate the first language first decomposed text information, translating the first language first decomposed text information into second language first decomposed text information using the first template, and combining the second language first decomposed text information to generate translated second language text information corresponding to the first language original text information to be translated, and an output control unit for outputting the translated second language text information.

Still Another aspect of the present invention is a program, which translates first language original text information, displayed on a game medium associated with a character, into a second language. The program causes a computer to perform functions as learning unit for learning multiple first templates, which include first language first decomposed text information obtained by decomposing existing first language original text information based on a first unit, and second language first decomposed text information corresponding to the existing first language first decomposed text information, an input unit for inputting first language original text information to be translated, and a translation unit for decomposing the input first language original text information based on the first unit to generate the first language first decomposed text information, translating the first language first decomposed text information into second language first decomposed text information using the first template, and combining the second language first decomposed text information to generate translated second language text information corresponding to the first language original text information to be translated, and an output control unit for outputting the translated second language text information.

### ADVANTAGEOUS EFFECT OF INVENTION

According to the present invention, it is possible to perform a translation that takes the characteristics of the text information to be translated, into consideration.

### BRIEF DESCRIPTION OF DRAWINGS

[FIG. 1] FIG. 1 is a diagram showing an example of a game card X, which is a game medium;
[FIG. 2] FIG. 2 is a diagram for explaining translation based on a skill unit according to the present embodiment;
[FIG. 3] FIG. 3 is a diagram for explaining translation based on a section unit according to the present embodiment;
[FIG. 4] FIG. 4 is a diagram for explaining translation based on a phrase unit according to the present embodiment;
[FIG. 5] FIG. 5 is a block diagram of the configuration of the translation apparatus system;
[FIG. 6] FIG. 6 is a flowchart of a pre-processing;
[FIG. 7] FIG. 7 shows an example of a screen for creating a first template;
[FIG. 8] FIG. 8 shows an example of a screen for creating second and third templates;
[FIG. 9] FIG. 9 is a flowchart of a translation process;
[FIG. 10] FIG. 10 shows an example of a translation screen;
[FIG. 11] FIG. 11 is a flowchart of an editing process;
[FIG. 12] FIG. 12 is a diagram for explaining a modified example according to the present embodiment;
[FIG. 13] FIG. 13 is a block diagram of a translation apparatus 2 according to a second embodiment; and
[FIG. 14] FIG. 14 is a diagram showing an example of an editing screen according to the second embodiment.

### DETAILED DESCRIPTION

### <First Embodiment>

The first embodiment of the present invention will be described. To facilitate understanding of the present embodiment, first, a character and a game medium will be described.

In games etc. in which characters are used, game media respectively associated with the characters are used. Such a character can be a person, a fictional creature, an item, etc. Each of the characters has character information, such as the character's name, place of birth, attribute, history, an ability value etc. All or part of this character information is displayed (printed) on the game medium.

The game medium associated with the character include a tangible game medium, which can be physically recognized by the players, and intangible virtual game media. The tangible game media include physical items with volume (real items) such as game cards. The intangible virtual game media include game cards displayed in an application game. In description set forth below, the game medium, which is a physical item with volume (real item) such as a game card, will be described as an example. Note that the game media are not limited to such game cards and can also be shaped items with the appearance of the characters such as figures.

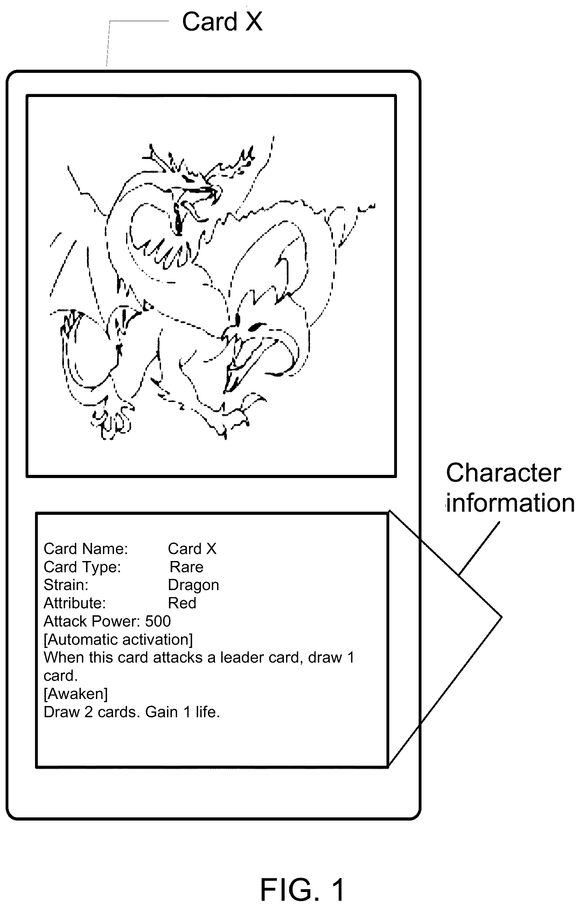

FIG. 1 shows an example of a game card X, which is a game medium. The game card X contains character information. The character information includes the card name, character name, strain and attributes, status information such as attack power, and skill (ability) information. In particular, the skill (ability) information is often description of player's actions and effects, and consists of a sentence (text).

Due to the internationalization of service provision in recent years, the character information described on such a game card 1 needs to be translated from the original language into the language of a country where a service of the game card(s) X is to be provided. However, there are so many types of game cards X, and there are limits to translation made by human, so that automation of translation is desirable.

Therefore, in this embodiment of the present invention, a translation system for translating text information of character information displayed (described) on game media such as game cards is described. In the following description, the original language of the game card 1 will be referred to as the first language, and the language translated by the translation will be referred to as the second language. Also, in this embodiment, case where the first language is Japanese and the second language is English will be described as an example.

The text information for the character information displayed (described) on the game media such as game cards is often distinguished from one another by a skill unit, and information of two or more skills (abilities) is often written thereon. For example, in the example of a game card 1 shown in FIG. 1, the following two skills are described:
- [Automatic Activation] When this card attacks a Leader Card, draw 1 card.
- [Awaken] Draw 2 cards. Gain 1 life."

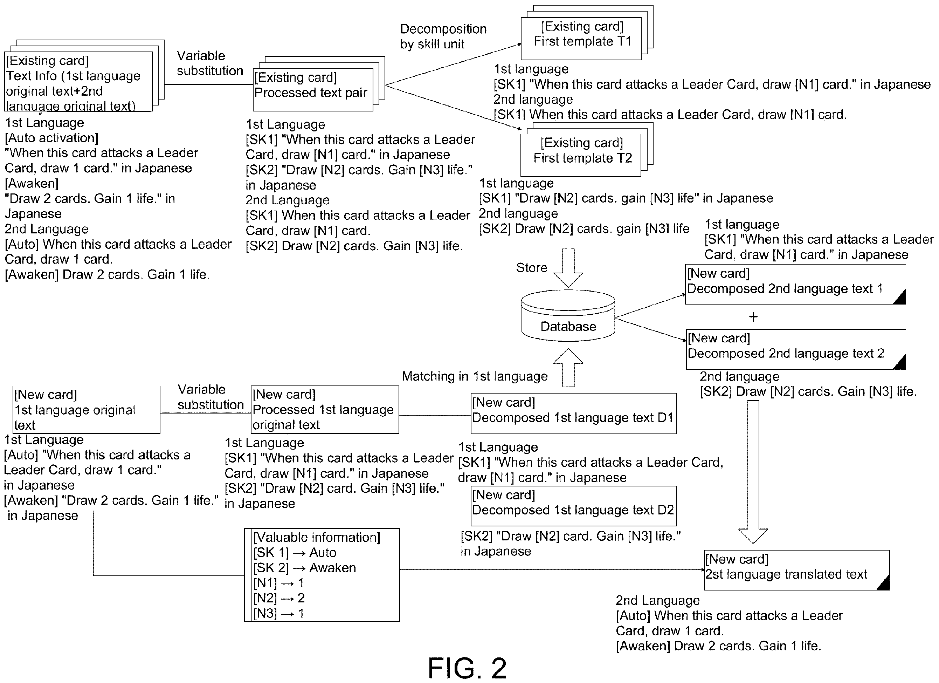

As described above, character information displayed (written) on a game medium such as a game card often comprises a sentence(s) at the skill level, which is standardized to some extent. Therefore, the translation system in this embodiment focuses on this characteristic and performs translation on the skill level basis. FIG. 2 is a diagram illustrating the skill-level translation in this embodiment.

In this embodiment, as shown in FIG. 2, as a pre-processing step for skill unit translation, the text information in the first language (Japanese) related to the skills written on existing game cards (hereinafter referred to as the original text information) is decomposed by the skill unit. The text information obtained by decomposing the original text information in the first language (Japanese) is referred to as the first language first decomposed text information (Japanese). Similarly, the text information translated into the second language (English) corresponding to the original text information in the first language (Japanese) related to the skills written on the existing game cards is decomposed by the skill unit. The text information obtained by decomposing the original text information in the second language (English) is referred to as the second language first decomposed text information (English). Then, a first template at the skill level, which includes the first language first decomposed text information (Japanese) and the second language first decomposed text information (English) corresponding to the first language first decomposed text information (Japanese), is generated. The first template is stored in a database.

In the example shown in FIG. 2, the original text information in the first language (Japanese) is "[Auto] When this card attacks a Leader Card, draw one card." and "[Awaken] Draw 2 cards. Gain 1 life." in Japanese. In this embodiment, before decomposing the original text information in the first language (Japanese) into the first decomposed text information at the skill level, character names, game medium names, skill names, or numerical values in the original text information in the first language (Japanese) are treated as variables. This is because the character names, game medium names, skill names, or numerical values may change depending on the character type, game rules, etc., while the other text parts are less likely to change. Specifically, the original text information in the first language (Japanese) is:
- "[Auto] When this card attacks a Leader Card, draw 1 card." in Japanese
- "[Awaken] Draw 2 cards. Gain 1 life." in Japanese

And the corresponding original text information in the second language (English) is:
   - "[Auto] When this card attacks a Leader Card, draw 1 card."
   - "[Awaken] Draw 2 cards. Gain 1 life."
Among these pieces of the original text information, the skill names and numerical values are converted into variables. The skill names are often enclosed in brackets, so they can be identified by recognizing brackets or similar symbols in the original text information. Specifically, the conversion is done as follows:
   <Original text information in the first language (Japanese) after variable conversion>
      - "[SK1] When this card attacks the Leader Card, draw [N1] card(s)." in Japanese
      - "[SK2] Draw [N2] cards. Gain [N3] life." in Japanese
   < Original text information in the second language (English) after variable conversion>
      - [SK1] When this card attacks a Leader card, draw [N1] card.
      - [SK2] Draw [N2] cards. Gain [N3] life.

After the variable conversion is completed, the original text information is decomposed according to the skill unit, and the first template at the skill level is generated. The first template includes the first language first decomposed text information (Japanese) and the second language first decomposed text information (English), corresponding to the first language first decomposed text information (Japanese). Specifically, the following two first templates are created:
<First Template T1>
   - "[SK1] When this card attacks a Leader Card, draw [N1] card(s)." in Japanese
   - "[SK1] When this card attacks a Leader Card, draw [N1] card."
<First Template T2>
   - "[SK2] Draw [N2] cards. Gain [N3] life." in Japanese
   - "[SK2] Draw [N2] cards. Gain [N3] life."

The first templates created in this manner are stored in the database. This pre-processing is performed for existing game cards where both the original text information in the first language (Japanese) and the original text information in the second language (English) are available, and the templates to be used in translation are registered in the database.

Next, the translation process for a new card using the first template will be explained. The translation process for the new card is performed similarly to the pre-processing. Specifically, the original text information in the first language (Japanese) for the new card is as follows:
- "[Auto] When this card attacks a Leader Card, draw 1 card." in Japanese
- "Awaken] Draw 2 cards. Gain 1 life." in Japanese

Among these pieces of the original text information, the skill names and numerical values are converted into variables. Specifically, the conversion is done as follows:
<Original text information in the first language (Japanese) after variable conversion>
   - "[SK1] When this card attacks a Leader Card, draw [N1] card(s)." in Japanese
   - "[SK2] Draw [N2] card. Gain [N3] life." in Japanese
   At this time, the skill names converted into variables are translated into the second language and the skill name in the second language are recorded, and for the converted numeral values, numerical values thereof are recorded as conversion information, specifically as follows:
<Variable Information>
   [SK1] → Auto
   [SK2] → Awaken
   [N1] ----7 1
   [N2] ----7 2
   [N3] ----7 1

Next, the original text information in the first language (Japanese) is decomposed by the skill unit to generate the first decomposed text information as follows:
<First Language First Decomposed Text Information D1 (Japanese)>
   - "[Auto] When this card attacks the Leader Card, draw 1 card." in Japanese
<First Language First Decomposed Text Information D2 (Japanese)>
   - "[SK2] Draw [N2] cards. Gain [N3] life." in Japanese

The translation system performs matching the first language first decomposed text information D1 (Japanese) and the first language first decomposed text information D2 (Japanese), with the first language first decomposed text information (Japanese) of the first template stored in the database. If there is a first template matched with the first language first decomposed text information (Japanese) stored therein, the second language first decomposed text information (English) of that first template is selected. The example shown in FIG. 2 is as follows:
< Second Language First Decomposed Text Information (English) Corresponding To First Language First Decomposed Text Information D1 (Japanese)>
   - "[SK1] When this card attacks a Leader Card, draw [N1] card." in Japanese
< Second Language First Decomposed Text Information (English) Corresponding To First Language First Decomposed Text Information D2 (Japanese)>
   - [SK2] Draw [N2] cards. Gain [N3] life.
Then, these two pieces of the second language first decomposed text information (English) are combined to generate combined text information. The example shown in FIG. 2 is as follows:
- [SK1] When this card attacks a Leader Card, draw [N1] card.
- [SK2] Draw [N2] cards. Gain [N3] life.

Subsequently, the variables in the combined text information are converted using the variable information, thereby generating the second language translated text information (English) corresponding to the first language original text information (Japanese). The example shown in FIG. 2 is as follows:
[Auto] When this card attacks a Leader Card, draw 1 card.
[Awaken] Draw 2 cards. Gain 1 life.
In this way, the second language translated text information (English) corresponding to the first language original text information (Japanese) is obtained. The translation is performed, taking into consideration, the characteristics of the character information shown on such a game medium such as a game card etc.

Even when the first template described above is used, there may be cases where no matched first template is found, so that no translation can be made. Therefore, a second template is added to improve the translation coverage rate.

The second template includes the second decomposed text information which is obtained by decomposing, by a clause unit, the first language first decomposed text information (Japanese) based on the skill unit, and second language second decomposed text information (English) corresponding to the first language second decomposed text information (Japanese). Here, a clause means a conditional clause (time, condition, case, etc.), apodosis (results, etc.), principal clause, subordinate clause, etc. Decomposing by a clause unit means, for example, decomposition of a sentence thereof into a conditional clause and an apodosis. The skill text information often consists of such a condition text and such an apodosis text which meets that condition. Therefore, the second template consists of text information decomposed based on the clause unit. The second template is stored in the database, just like the first template.

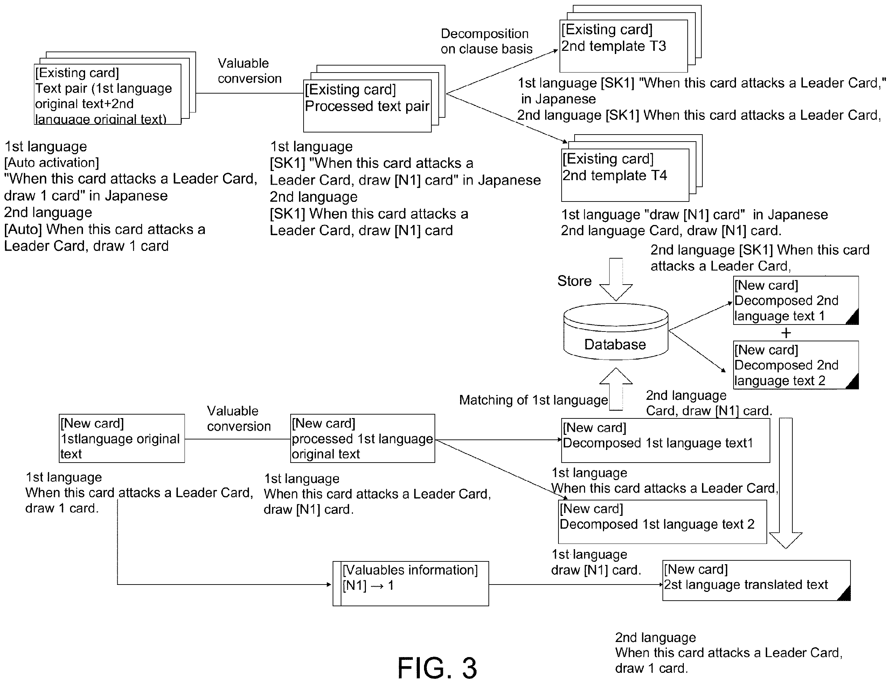

FIG. 3 is a diagram for explaining translation based on the clause unit according to the present embodiment. In FIG. 3, as a pre-processing step, first language first decomposed text information (Japanese), for which the variables has been converted and decomposed at the skill level, is further decomposed into a conditional clause and an apodosis, using morphological analysis or the like. In FIG. 3, the first language first decomposed text information (Japanese) is "[SK1] When this card attacks a Leader Card, draw [N1] card." in Japanese. The first language second decomposed text information (Japanese) obtained by decomposing this first decomposed text information, "[SK1] When this card attacks a Leader Card, draw [N1] card." into conditional and apodosis clauses, is as follows:
<First language second decomposed text information (Japanese) D3>
   Conditional Clause: "[SK1] When this card attacks a Leader Card," in Japanese
<First language second decomposed text information (Japanese) D4>
   Apodosis: "draw [N1] card." in Japanese

Meanwhile, the second language first decomposed text information (English) is "[SK1] When this card attacks a Leader Card, draw [N1] card." The second language second decomposed text information (English) obtained by decomposing the first decomposed text information, "[SK1] When this card attacks a Leader Card, draw [N1] card" into conditional and apodoses is as follows:
<Second Language Second Decomposed Text Information (English) Corresponding to First Language First Decomposed Text Information D3 (Japanese) >
   - Conditional Clause: "[SK1] When this card attacks a Leader Card" in Japanese
< Second Language Second Decomposed Text Information (English) Corresponding to First Language First Decomposed Text Information D4 (Japanese)>
   - Apodosis: draw [N1] card.
And, the second template is as follows:
< Second Template T3>
   - [SK1] "When this card attacks a Leader Card," in Japanese
   - [SK1] "When this card attacks a Leader Card"
<Second Template T4>
   - "draw [N1] card." in Japanese
   - draw [N1] card.

Such pre-processing is performed on existing game cards for which both the original text information in first language (Japanese) and the original text information in the second language (English) are available, and further a pre-processing is performed to register these templates to be used for translation, in the database. The pre-processing can be done automatically or manually.

Next, a translation process for a new card will be explained. If there is no first template, which is matched with first language first decomposed text information (Japanese) for the new card, first language first decomposed text information (Japanese) is decomposed based on the clause unit to generate the first language second decomposed text information (Japanese). For example, if there is no first template, which is matched with the first decomposed text information, "When this card attacks a Leader Card, draw [N1] card" in Japanese, this first decomposed text information, "When this card attacks a Leader Card, draw [N1] card" in Japanese is decomposed into second decomposed text information. Note that in FIG. 3, although the variable conversion processing is performed, if the conversion and conversion processing has already been done at the stage of the original text information in the first language (Japanese), the variable conversion processing does not need to be performed since the valuables have been converted. The second decomposed text information (Japanese) obtained by decomposing the first decomposed text information, "When this card attacks a Leader Card, draw [N1] card" in Japanese, is as follows:
<First Language Second Decomposed Text Information (Japanese) D5>
   - [SK1] "When this card attacks a Leader Card, draw [N1] card," in Japanese
<First Language First Decomposed Text Information (Japanese) D6>
   - "draw [N1] card" in Japanese

The translation system matches the first language second decomposed text information (Japanese) D5 and the first language second decomposed text information (Japanese) D6, with the first language second decomposed text information (Japanese) in the second template stored in the database. If there is a second template, which is matched with the first language second decomposed text information (Japanese), the second language second decomposed text information (English) in that second template is selected. The example of FIG. 3 is as follows:
<Second Language Second Decomposed Text Information (English) Corresponding to First Language Second Decomposed Text Information (Japanese) D5>
   - [SK1] When this card attacks a Leader Card,
<Second Language Second Decomposed Text Information (English) Corresponding to First Language Second Decomposed Text Information (Japanese) D6>
   - draw [N1] card.
These two pieces of second language second decomposed text information (English) are then combined to generate combined text information. The example of FIG. 3 is as follows:
- [SK1] When this card attacks a Leader Card, draw [N1] card.

Next, the variables in the combined text information are converted using variable information to generate the translated text information in the second language (English) corresponding to the original text information in the first language (Japanese). The example shown in FIG. 3 is as follows:
- [Auto] When this card attacks a Leader Card, draw 1 card.

Although in the above example, the use of the second template is explained to improve the translation coverage rate, an example in which a third template is further added will be explained below. The third template includes third decomposed text information which is obtained by decomposing the skill unit based first decomposed text information (Japanese) based on a punctuation unit, and second language third decomposed text information (English) corresponding to the first language third decomposed text information (Japanese). Here, punctuation refers to periods (.) and commas (,) in Japanese, and the decomposing based on a punctuation unit means, for example, decomposition of a sentence at periods or commas. Skill text information often consists of a single skill composed of multiple sentences or complex sentences. Therefore, the third template consists of text information decomposed based on the punctuation unit. The third template is stored in the database, just like the first and second templates.

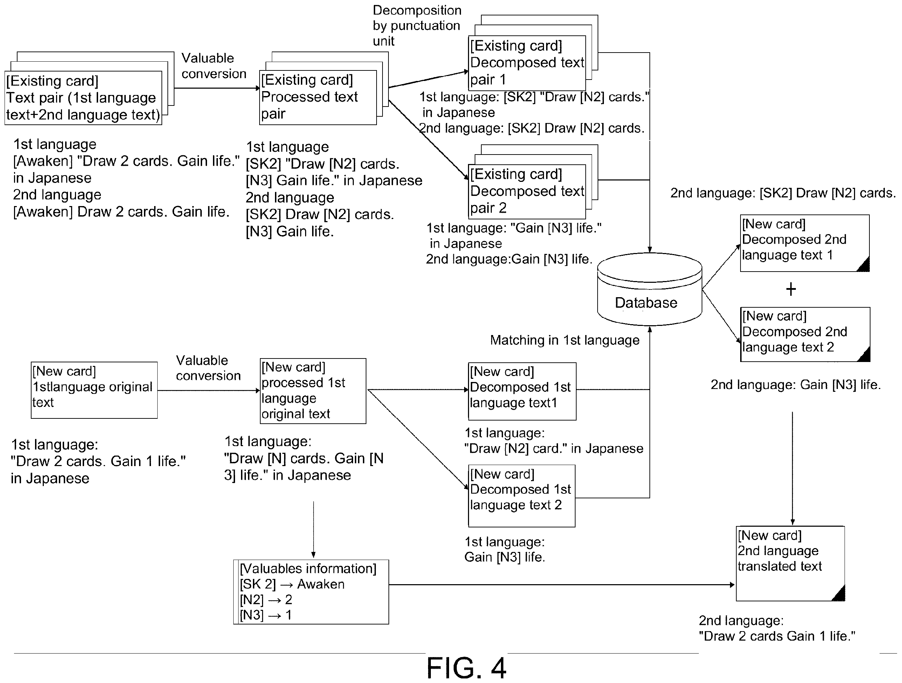

FIG. 4 is a diagram for explaining translation based on a period unit according to the present embodiment. Although the example in FIG. 4 shows a period based example, the same method can be applied to a comma unit based example. In FIG. 4, the first language first decomposed text information (Japanese), for which valuable conversion has been performed, and which has been decomposed based on the skill unit, is further decomposed by punctuations, as a pre-processing step. Referring to FIG. 4, the first language first decomposed text information (Japanese) is "[SK2] Draw [N2] cards. Gain [N3] life." in Japanese. The first language third decomposed text information (Japanese) obtained by decomposing the first decomposed text information, which is "[SK2] Draw [N2] cards. Gain [N3] life." in Japanese, based on the period unit, is as follows:
<First Language Third Decomposed Text Information (Japanese) D7>
   - [SK2] "Draw [N2] cards." in Japanese
<First Language Third Decomposed Text Information (Japanese) D8>
   - "Gain [N3] life." in Japanese

On the other hand, the second language first decomposed text information (English) is "[SK2] Draw [N2] cards. Gain [N3] life." The second language third decomposed text information (English) corresponding to the first language third decomposed text information (Japanese) D7 is as follows:
<Second Language Second Decomposed Text Information (English) Corresponding To First Language Third Decomposed Text Information (Japanese) D7>
   - [SK2] Draw [N2] cards.
<Second Language Second Decomposed Text Information (English) Corresponding To First Language Third Decomposed Text Information (Japanese) D8>
   - Gain [N3] life.
The third template is as follows:
<Third Template T5>
   - [SK2] "Draw [N2] cards." in Japanese
<Third Template T6>
   - Gain [N3] life.

Such pre-processing is performed on existing game cards for which both the original text information in the first language (Japanese) and the original text information in the second language (English) are available, and further a pre-processing step is performed to register these templates used for translation in the database.

Next, the translation process for a new card will be explained. If there is no first template, which is matched with the first language first decomposed text information (Japanese) in the translation process for the new card, the first language first decomposed text information (Japanese) is decomposed based on periods to generate second language third decomposed text information (Japanese). For example, if there is no first template, which is matched with the first decomposed text information "[SK2] Draw [N2] cards. Gain [N3] life." in Japanese, the first decomposed text information "[SK2] Draw [N2] cards. Gain [N3] life." in Japanese is decomposed into third decomposed text information. Although the variable conversion processing is performed in FIG. 4, if the conversion processing has already been performed at stage of the original text information in the first language (Japanese), since the variables have already been converted, there is no need to perform such conversion processing. The third decomposed text information obtained by decomposing the first decomposed text information, which is "[SK2] Draw [N2] cards. Gain [N3] life." in Japanese, is as follows:
<THIRD DECOMPOSED TEXT INFORMATION D9 IN THE FIRST LANGUAGE (JAPANESE)>
   - [SK2] "Draw [N2] cards." in Japanese
<FIRST LANGUAGE THIRD DECOMPOSED TEXT INFORMATION (JAPANESE) D10>
   - "Gain [N3] life." in Japanese

The translation system matches the first language first decomposed text information (Japanese) D9 and the first language first decomposed text information (Japanese) D10, with the first language third decomposed text information (Japanese) in the third template, which is stored in the database. If there is a third template, which is matched with the first language third decomposed text information (Japanese), the second language third decomposed text information (English) of that third template is selected. The example shown in FIG. 4 is as follows:
<Second Language Third Decomposed Text Information (English) Corresponding to The First Language Second Decomposed Text Information (Japanese) D9>
   - [SK2] Draw [N2] cards.
<Second Language Third Decomposed Text Information (English) Corresponding to The First Language Third Decomposed Text Information (Japanese) D10>
   - Gain [N3] life.
Then, these two pieces of the second language third decomposed text information (English) are combined to generate combined text information. The example shown in FIG. 4 is as follows:
- [SK2] Draw [N2] cards. Gain [N3] life.

Next, the variables in the combined text information are converted using variable information, and the translation text information in the second language (English) corresponding to the original text information in the first language (Japanese) is generated. The example shown in FIG. 4 is as follows:
- [Awaken] Draw 2 cards. Gain 1 life.
In the present embodiment, templates are created considering the characteristics of character information described on game media such as game cards, and these templates are matched with the original text information to be translated, so that the original text information is translated into another language. Note that the order of applying the first template, second template, and third template does not necessarily have to follow the sequence of the first template, second template, and third template. It is also possible to apply them in the order of the first template, third template, second template. In addition, if the translation cannot be performed even after applying the first template, second template, and third template, the original text information in the first language can be decomposed by a word unit through morphological analysis, etc., and then translated based on the word unit.

The specific configuration and operation of the translation system according to the present embodiment will be described.

### <Configuration Of the Translation Apparatus System>

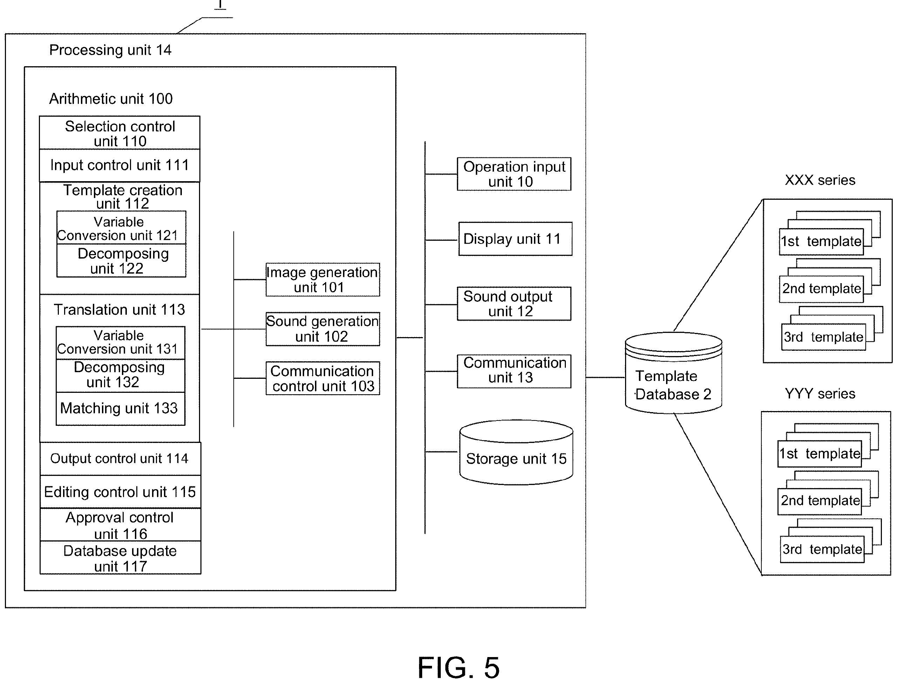

FIG. 5 is a block diagram of the configuration of the translation apparatus system. The translation apparatus system comprises a translation apparatus 1 and a database 2. The translation apparatus 1 comprises an operation input unit 10, a display unit 11, a sound output unit 12, a communication unit 13, a processing unit 14, and a storage unit 15.

The operation input unit 10 is used for the user to input text information related to the translation and various operations, and outputs an operation input signal corresponding to an operation input(s) to the processing unit 14. The function of the operation input unit 10 can be realized by, for example, elements directly operated by the user's finger(s), such as a keyboard, mouse, operation touchpad, home button, button switches, joystick, trackball, or elements that detect motion or posture, such as an accelerometer, angular velocity sensor, tilt sensor, or geomagnetic sensor.

The display unit 11 can be realized by a display device such as a flat-panel display like an LCD, a cathode-ray tube (CRT), a projector, or a head-mounted display.

The sound output unit 12 outputs sound related to translation, such as sound effects etc., based on the sound signal. The sound output unit 12 is a speaker or the like.

The communication unit 13 realizes communication by connecting itself to a communication line N. The function of the communication unit 13 can be realized by devices such as a wireless communication device, modem, TA (terminal adapter), or wired communication cable jack and control circuit.

The processing unit 14 comprehensively controls the operation of the translation apparatus 1 based on programs and data stored in the storage unit 15 and various input signals from the operation input unit 10. The function of the processing unit 14 can be realized by electronic components such as a microprocessor like a CPU or GPU, ASIC, and IC memory. The processing unit 14 comprises an arithmetic unit 100, an image generation unit 101, a sound generation unit 102, and a communication control unit 103 as a main functional unit.

The arithmetic unit 100 executes the translation process and outputs the processing result to the image generation unit 101, the sound generation unit 102, and/or the communication control unit 103. The arithmetic unit 100 comprises a selection control unit 110, an input control unit 111, a template creation unit 112, a translation unit 113, an output control unit 114, an editing control unit 115, an approval control unit 116, and a database update unit 117.

The selection control unit 110 controls a selection of a template group used for text translation of new cards from template groups stored in the database.

The input control unit 111 controls an input of first language original text information and second language translation text information of existing cards for the creation of templates, and first language original text information of the new cards.

The template creation unit 112 creates the first template, second template, and third template used for translation, from the first language original text information of existing cards and the second language translation text information thereof. The template creation unit 112 stores the created first template, second template, and third template in the database 2. The template creation unit 112 comprises a variable conversion unit 121 and a decomposing unit 122.

The variable conversion unit 121 converts skill names, numbers, etc., in the first language original text information of existing cards and the translated text information in the second language, into variables. The skill names in the original text information are enclosed in parentheses etc. and the parentheses are identified to convert the skill names into variables. Numbers may be converted into variables, distinguishing between singular and plural. The variable conversion unit 121 stores the converted skill names, numbers, etc., as variable information.

The decomposing unit 122 uses morphological analysis, etc., to decompose the first language original text information for existing cards and the second language translated text information as the first decomposed text information, second decomposed text information, and third decomposed text information. The decomposing unit 122 creates the first template, second template, and third template by pairing the first decomposed text information, second decomposed text information, and third decomposed text information in the first language, with the second language first decomposed text information, the second language second decomposed text information and the second language third decomposed text information which correspond to those decomposed text information, respectively.

The translation unit 113 translates the first language original text information for new cards into second language translation text information, using the selected template group. The translation unit 113 comprises a variable conversion unit 131, a decomposing unit 132, and a matching unit 133.

The variable conversion unit 131 converts the skill names, numbers, etc., in the first language original text information of new cards into variables. The skill names in the original text information of the new card are enclosed in parentheses or similar symbols and parentheses are identified and converted into variables. Numbers may be converted into variables, distinguishing between singular and plural. The variable conversion unit 131 stores the converted skill names, numbers, etc., as variable information.

The decomposing unit 132 uses morphological analysis, etc., to decompose the first language original text information of new cards into the first decomposed text information, second decomposed text information, and third decomposed text information.

The matching unit 133 matches the first language first decomposed text information, first language second decomposed text information, and first language third decomposed text information of new cards, with the first language decomposed text information in the first template, second template, and third template. If a matched template is found, the matching unit 133 outputs the second language decomposed text information in the matched template.

The output control unit 114 controls an output of a template creation screen and a translation screen for translation. The creation screen and translation screen are displayed in a format that compares the first language text information and the second language translated text information corresponding to the first language text information, with each other.

The editing control unit 115 controls the editing of the translated text in the second language.

The approval control unit 116 controls approval or disapproval of the translated text in the second language.

The database update unit 117 controls to update the templates in the database 2.

The image generation unit 101 generates a screen image for each frame time (for example, 1/60th of a second) based on the processing results of the arithmetic unit 100, and outputs an image signal of the generated screen image to the display unit 11. The function of the image generation unit 101 can be realized, for example, by a processor such as a GPU or a digital signal processor (DSP), a video signal IC, a program for a video codec etc., an IC memory used for rendering frames, such as a frame buffer, or an IC memory used for expanding texture data and the like.

The sound generation unit 102 generates, based on the processing results of the arithmetic unit 100, sound signals such as sound effects related to translation, background music (BGM), audio information for operation assistance, and various operation sounds, and outputs these to the sound output unit 12. The function of the sound generation unit 102 can be realized, for example, by a processor such as a digital signal processor (DSP) or a voice synthesis IC, or an audio codec etc. capable of playing audio files.

The communication control unit 103 performs communication connections and data processing for data communication with the database 2 and other terminals.

The storage unit 15 stores (or temporally stores, each time processing is performed,) system programs, translation programs, and data used during program execution, which are required to operate the translation apparatus 1 and to realize the various functions of the translation apparatus 1. The storage unit 15 can be realized, for example, by a solid-state drive using IC memory such as RAM, ROM, or flash memory, a magnetic disk such as a hard disk, or an optical disk such as a CD-ROM or DVD. The system program is a program that realizes the basic functions of the translation apparatus 1 as a computer. The translation program is a program that enables the arithmetic unit 100 to function as the selection control unit 110, the input control unit 111, the template creation unit 112, the translation unit 113, the output control unit 114, the editing control unit 115, the approval control unit 116, and the database update unit 117.

The database 2 stores a group of templates composed of the first, second, and third templates, which are created through pre-processing for each series of game cards.

### <Explanation of the Operation of the Translation Apparatus 1 >

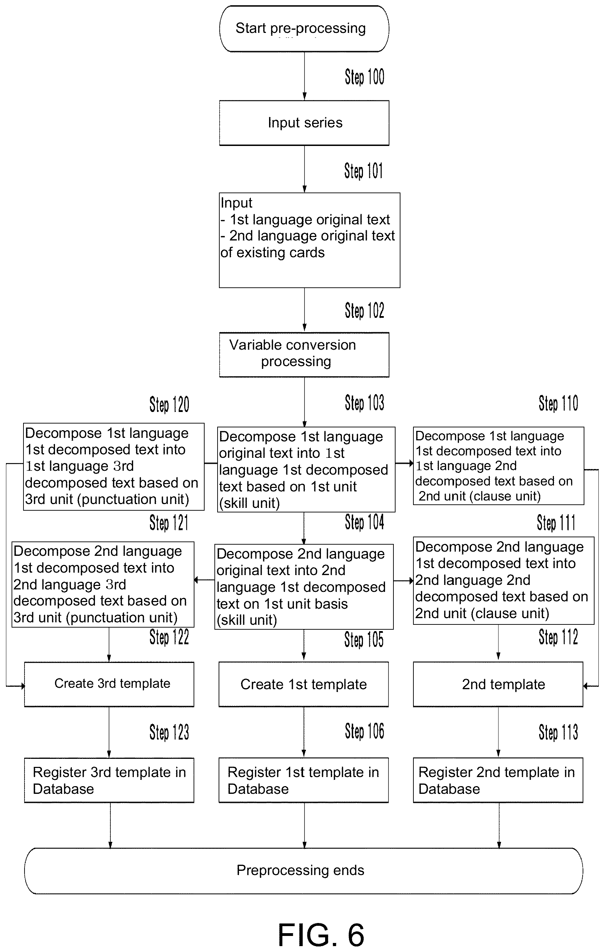

The operation of the translation apparatus 1 will be explained. First, the pre-processing will be described. FIG. 6 is a flowchart of the pre-processing.

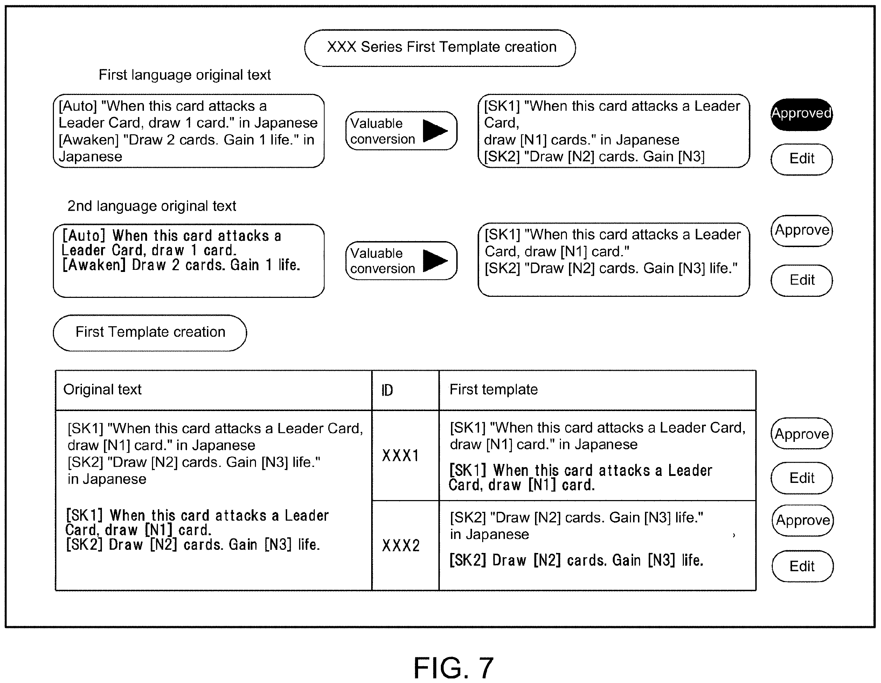

When the user activates the template creation screen, the template creation unit 112 displays the template creation screen. FIG. 7 is an example of the first template creation screen.

The user prepares existing cards for which both the original text in the first language and the original text in the second language are available and enters the series name of the existing cards (Step 100). When the cards belong to the same series, the names of characters, card names, skill names, and text content are identical or similar, so that creating templates for each series increases the accuracy thereof, whereby the accuracy of the translation performed by using these templates is increased. A first template creation screen shown in FIG. 7 is a template creation screen for the 'XXX series.'

The user inputs the original text information in the first language and the original text information in the second language onto the first template creation screen. The input control unit 111 reads the input original text information in the first language and the original text information in the second language, and the output control unit 114 displays the original text information in the first language and the original text information in the second language (Step 101). In the example of the first template creation screen in FIG. 7, the input text is as follows:
- Original text information in the first language (Japanese)
   [Auto Activation] "When this card attacks a Leader Card, draw 1 card." in Japanese
   [Awakening] "Draw 2 cards. Gain 1 life." in Japanese
- Original text information in the second language (English)
   [Auto] When this card attacks a Leader Card, draw 1 card.
   [Awaken] Draw 2 cards. Gain 1 life.

When the user presses a variable conversion button, the variable conversion unit 121 converts the 'skill names' and 'numbers' in the original text information in the first language (Japanese) and the original text information in the second language (English), into variables (Step 102). Skill names can be identified since they are enclosed in brackets ([ ]) or similar. Numbers may be converted into different variables, distinguishing between singular and plural. The user confirms the sentences after variable conversion and, if necessary, presses an edit button to modify the sentences. If the sentences after the variable conversion are acceptable, the user presses an approval button to complete the variable conversion process.

When the user presses a first template button, the decomposing unit 122 decomposes the original text information in the first language (Japanese) and the original text information in the second language (English) after variable conversion, based on the skill unit, and generates and displays the first decomposed text (the first template) (Step 103, Step 104). In the example in FIG. 7, the following two first templates are created:
<First Template (ID: XXX1)>
   - [SK1] "When this card attacks a Leader Card, draw [N1] card(s)." in Japanese
   - [SK1] When this card attacks a Leader Card, draw [N1] card.
<First Template (ID: XXX2)>
   - [SK2] "Draw [N2] cards. Gain [N3] life." in Japanese
   - [SK2] Draw [N2] cards. Gain [N3] life.

The user checks the decomposed text and, if necessary, presses the edit button to modify the text. If the text after decomposition is acceptable, the user presses the approve button. This finalizes the first template (Step 105), and the decomposing unit 122 registers the finalized first template in the database 2 (Step 106). Through the above processing, the first template is registered in database 2.

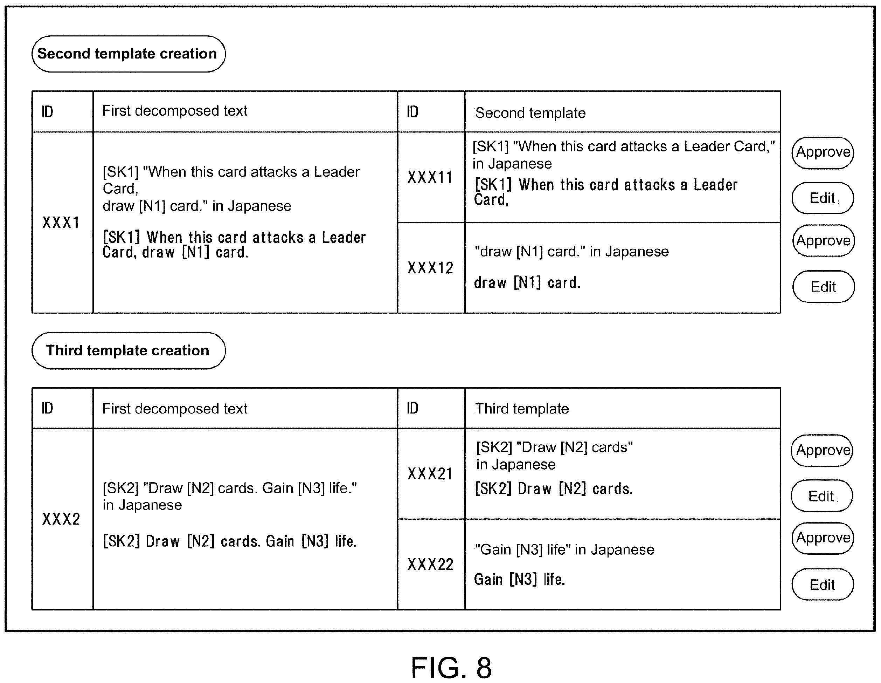

Next, the creation of the second template using the first decomposed text of the first template will be explained. The output control unit 114 displays the creation screen for the second template and the third template. FIG. 8 shows an example of the creation screen for the second and third templates.

When the user presses the button for the second template, the decomposing unit 122 uses morphological analysis and other methods to decompose the first decomposed text (first template) obtained by the creation of the first template, based on the clause unit, and displays the results (Step 110, Step 111). In the example shown in FIG. 8, two second templates have been created from the first decomposed text (first template) with ID: XXX1.
<Second Decomposed Text (Id: XXX 11)>
   [SK1] "When this card attacks a Leader Card," in Japanese
   [SK1] When this card attacks a Leader Card,
<Second Decomposed Text (Id: XXX12)>
   - "draw [N1] card." in Japanese
   - draw [N1] card.

The user checks the decomposed text and, if necessary, presses the edit button to modify the sentence(s). If the decomposed sentences are acceptable, the user presses the approve button. This finalizes the second template (Step 112), and the decomposing unit 122 registers the finalized second template in the database 2 (Step 113). Through the above processing, the second template is registered in database 2.

Next, the creation of the third template, which uses the first decomposed text of the first template will be explained. When the user presses a button for the third template, the decomposing unit 122 decomposes the first decomposed text (first template) obtained by the creation of the first template based on the period unit, and displays the results (Step 120, Step 121). In the example shown in FIG. 8, two third templates have been created from the first decomposed text (first template) with ID: XXX1.
<Third Decomposed Text (ID: XXX21)>
   - [SK2] "Draw [N2] cards." in Japanese
<Third Decomposed Text (ID: XXX22)>
   - "Gain [N3] life." in Japanese

The user checks the decomposed text and, if necessary, presses an edit button to modify the sentence(s). If the decomposed sentences are acceptable, the user presses an approve button. This finalizes the third template (Step 122), and the decomposing unit 122 registers the finalized third template in the database 2 (Step 123). Through the above processing, the third template is registered in database 2. These processes are performed for the original text information of the existing cards which have been prepared, and the template group for the XXX series is stored in database 2.

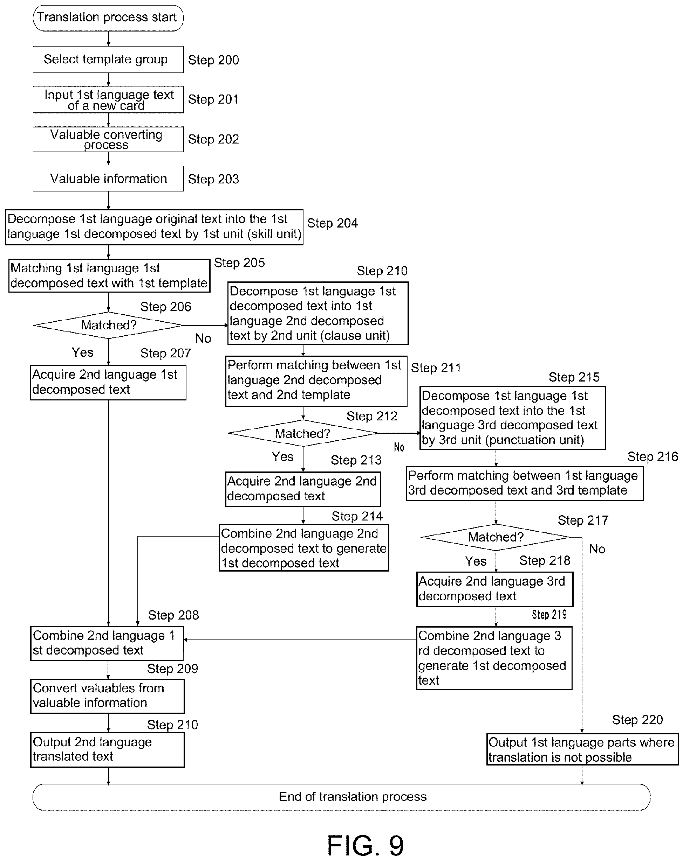

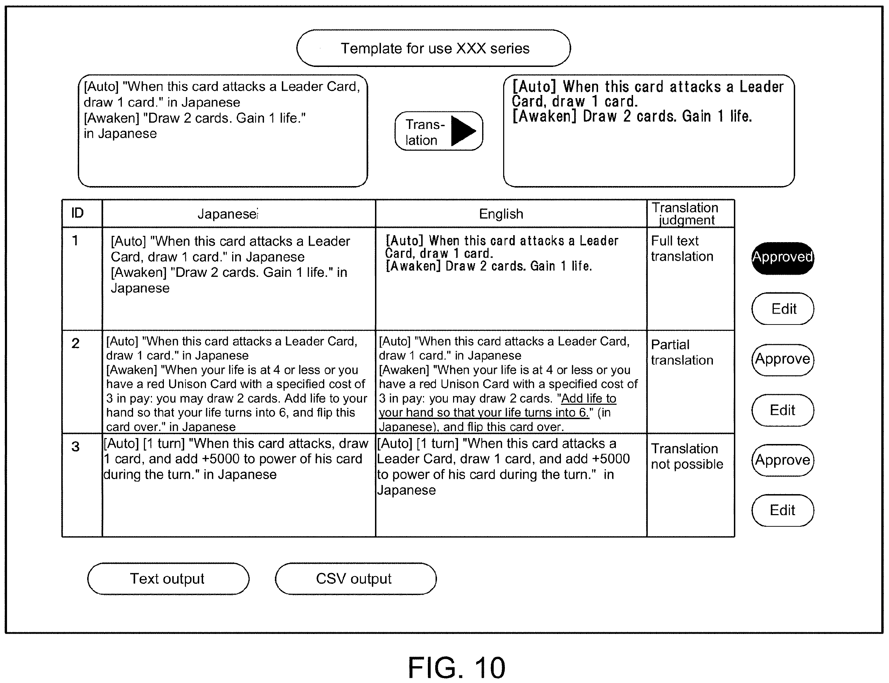

Next, the translation process will be explained. FIG. 9 is a flowchart of the translation process. The output control unit 114 displays a translation screen. FIG. 10 shows an example of the translation screen. The user selects the template group to use (Step 200). The selection control unit 110 reads the selected template group from database 2. In the translation screen shown in FIG. 10, the "XXX series" is selected, and the template group of the "XXX series" is read from database 2.

The input control unit 111 inputs the original text of the new card in the first language (Japanese) which is entered by the user on the translation screen (Step 201). On the translation screen shown in FIG. 10, the following original text in the first language (Japanese) is entered:
- [Auto Activation] "When this card attacks a Leader Card, draw 1 card." in Japanese
- [Awaken] "Draw 2 cards. Gain 1 life." in Japanese

When the user presses the translate button, the variable conversion unit 131 of the translation unit 113 converts the skill names and numbers in the original text of the new card in the first language (Japanese) into variables (Step 202). The first language original text (Japanese) after variable conversion, is as follows:
[SK1] "When this card attacks a Leader Card, draw [N1] card." in Japanese
[SK2] "Draw [N2] cards. Gain [N3] life." in Japanese

Then, the variable conversion unit 131 records the conversion information for the converted variables (Step 203). The conversion information in this example is set forth below. Additionally, the skill names are pre-prepared and stored as the translation text in the second language, and the translation text of the skill names in the second language is stored during variable conversion.

### <Variable Information>

[SK1] → Auto
[SK2] → Awaken
[N1] ----7 1
[N2] ----7 2
[N3] ----7 1

The decomposing unit 132 decomposes the variable-converted original text in the first language (Japanese) into first decomposed text based on a skill unit (Step 204). This first decomposed text in this example is as follows:
[SK1] "When this card attacks a Leader Card, draw 1 card." in Japanese
[SK2] "Draw [N2] cards. Gain [N3] life." in Japanese

The matching unit 133 performs matching between the first language first decomposed text (Japanese) based on the skill unit and the first language first decomposed text information (Japanese) in the first template stored in database 2 (Step 205). If there is a first template, which is matched with the first language first decomposed text information (Japanese) (Step 206), the second language first decomposed text information (English) of that first template is acquired (Step 207).

The translation unit 113 combines the obtained pieces of the second language first decomposed text information (English) and generates the translated text information in the second language (English) for which variable conversion is not performed (Step 208).

On the other hand, if there is no first template, which is matched with the first language first decomposed text information (Japanese) (Step 206), the decomposing unit 132 decomposes the first language first decomposed text information (Japanese) into second decomposed text information (Step 210).

The matching unit 133 performs matching between the first language second decomposed text information (Japanese) and the first language second decomposed text information (Japanese) of the second template stored in database 2 (Step 211). If there is a second template, which is matched with the first language second decomposed text information (Japanese) (Step 212), the second language second decomposed text information (English) of that second template is acquired (Step 213). The translation unit 113 combines the obtained pieces of the second language second decomposed text information (English) and generates the second language first decomposed text information (English) (Step 214). Then, the process proceeds to Step 208.

On the other hand, if there is no second template, which is matched with the first language second decomposed text information (Japanese) (Step 212), the decomposing unit 132 decomposes the first language first decomposed text information (Japanese) into third decomposed text information (Step 215).

The matching unit 133 performs matching between the first language third decomposed text information (Japanese) and the first language third decomposed text information (Japanese) of the third template stored in database 2 (Step 216). If there is a third template, which is matched with the first language third decomposed text information (Japanese) (Step 217), the second language third decomposed text information (English) of that third template is acquired (Step 218). The translation unit 113 combines the obtained pieces of the second language third decomposed text information (English) and generates the second language first decomposed text information (English) (Step 219). Then, the process proceeds to Step 208. If there is no third template, which is matched with the first language third decomposed text information (Japanese) (Step 217), parts which cannot be translated is output in the first language (Japanese) as they are (Step 220).

The variable conversion unit 131 uses the conversion information to perform variable conversion on the translated text information (combined text information) in the second language (English) on which the variable conversion is not performed (Step 209). Then, the output control unit 114 outputs the translated text information in the second language (English) (Step 210). In the translation screen shown in FIG. 10, the translated text information in the second language (English) which is output is as follows:
[Auto] When this card attacks a Leader Card, draw 1 card.
[Awaken] Draw 2 cards. Gain 1 life.

This concludes the explanation of the translation process.

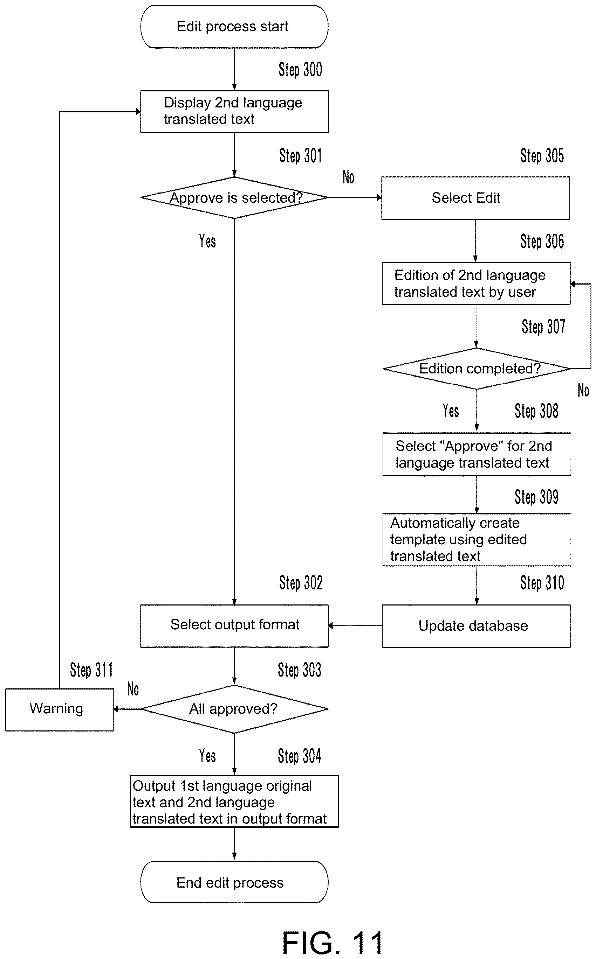

Next, editing process will be explained. FIG. 11 is a flowchart of the editing process. The output control unit 114 outputs the translated text information in the second language (English) (Step 300). In the translation screen shown in FIG. 10, three pairs of original text information in the first language (Japanese) and translated text information in the second language (English) are displayed. For each set, the translation result (full translation, partial translation, or translation not possible) is noted.

The user checks the translated text information in the second language (English), and if the translation can be approved, presses the approval button (Step 301). When the approval button is pressed, the approval control unit 116 changes the button to an approved state. On the other hand, if the user wants to edit the translated text information in the second language (English) (Step 305), the user presses the edit button. When the edit button is pressed, the editing control unit 115 enables the user to edit the translated text information in the second language (English) (Step 306). Once the editing is completed (Step 307), the user presses the approved button (Step 308). By pressing the approved button after editing, the template creation unit 112 creates a new template using the edited translated text information in the second language (English) (Step 309). The creation of the new template is the same as the pre-processing described above. The database updating unit 117 stores the newly created template in database 2 and updates the database 2 (Step 310).

The user selects an output format of the translated text information in the second language (English) to make the translated text information in the second language (English) usable (Step 302). The approval control unit 116 determines whether all the translated text information in the second language (English) has been approved (Step 303), and if all the translated text information in the second language (English) has been approved, the output control unit 114 outputs all the original text information in the first language (Japanese) and the translated text information in the second language (English) according to the selected output format (Step 304). On the other hand, if not all the translated text information in the second language (English) has been approved, the approval control unit 116 issues a warning by sound or display (Step 311).

This embodiment creates the templates considering the characteristics of character information displayed (printed) on game media such as game cards, and performs translation by matching the templates with text information to be translated, thereby achieving highly accurate translation. In particular, when considering the character information printed on game media such as game cards, it is important to focus on skills, sections, and punctuation. This is because the character information printed on game media such as game cards is often written on a skill-by-skill basis, because the text of the skill often consists of a condition text and a consequence text where the condition is met and further, because the skill text may be in compound sentences.

### <Modified Example of this Embodiment>

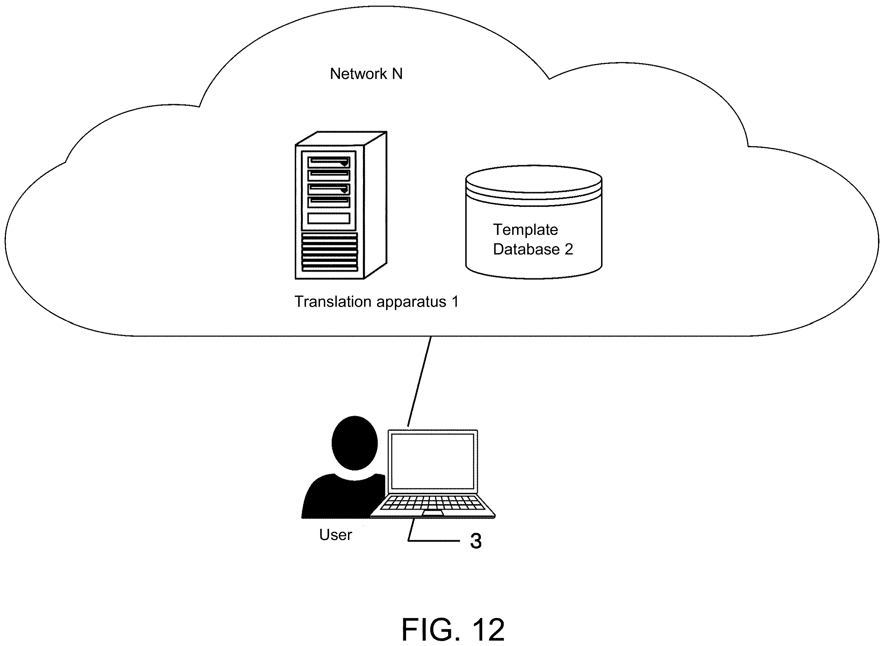

The translation system described above is explained as a standalone system. However, part of the translation system may be on the cloud. FIG. 12 is a diagram for explaining the modified example of this embodiment. As shown in FIG. 12, the main components other than the operation input unit and display unit of the translation apparatus 1, and the database 2 exist on the cloud and are configured to communicate with a user's terminal 3. Even with such a configuration, the same operation as the embodiment described above can be performed. Note that the main components of the translation apparatus 1 do not need to be installed individually and may coexist with other servers within the cloud system.

### <Second Embodiment>

In the second embodiment, when the original text information in the first language for a new card is created or translated, the original text information in the first language and the text information in the second language (translated text) of existing cards are referenced, and creation of the original text information in the first language for the new card and edition of the translated text information in the second language is made possible.

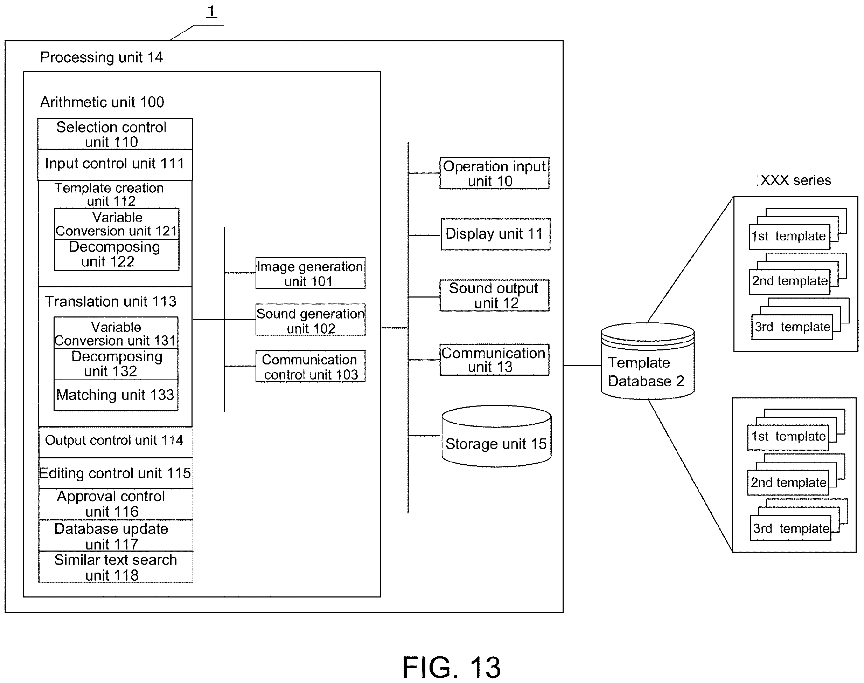

FIG. 13 is a block diagram of the translation apparatus 2 according to the second embodiment. In addition to the first embodiment, the translation apparatus 2 includes a similar text search unit 118. The similar text search unit 118 calculates the similarity between the input original text information in the first language (translation target) and the first decomposed text information in the first language, the second decomposed text information therein, and the third decomposed text information therein of the first template, second template, and third template, and searches for the first decomposed text information, second decomposed text information, and third decomposed text information in Japanese that meet a predetermined similarity level. Here, similarity means that part of the first language text information and the second language text information overlap, or the meaning remains the same even if the notation varies or the word order is changed. The similarity is calculated using known methods such as Levenshtein distance or sentence feature vectors. The similar text search unit 118 then outputs the first decomposed text information in the first language, second decomposed text information therein, and third decomposed text information therein that meets the predetermined similarity level, along with the corresponding first decomposed text information in the second language, second decomposed text information therein, and third decomposed text information therein.

The output control unit 114 displays, on the display unit 11, the translation target original text information in the first language, the first decomposed text information in the first language, second decomposed text information therein, and third decomposed text information therein that meet the predetermined similarity level, and the corresponding first decomposed text information in the second language, second decomposed text information therein, and third decomposed text information therein.

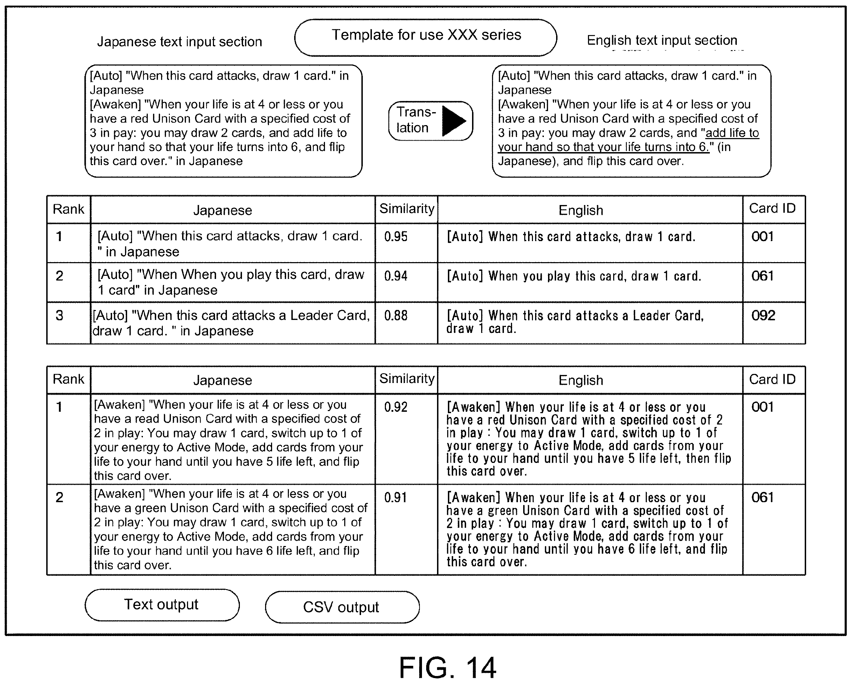

FIG. 14 shows an example of an editing screen in the second embodiment. In the example of the editing screen in FIG. 14, the original text information in Japanese and the corresponding translated text information in English are displayed. Furthermore, the original text information in Japanese (first decomposed text information), and the original text information in Japanese (first decomposed text information) and the translated text information in English (first decomposed text information) which meet the predetermined similarity level, are displayed based on the skill unit.

The editing control unit 115 performs control to enable a user to refer to similar original text information in Japanese (first decomposed text information) and translated text information in English (first decomposed text information) and to edit the original text information in Japanese (translation target) or the translated text information in English. In the editing screen shown in FIG. 14, the user can refer to the displayed Japanese and English text information of existing cards with high similarity, and edit the original text information in Japanese and the corresponding translated text information in English.

In this way, by presenting the translation target original text information in the first language, and the first decomposed text information, second decomposed text information, and third decomposed text information with a predetermined similarity level, the user can edit the original text information in the first language so as to be easily translated or to make a translated text more accurate.

Furthermore, it is also possible to add a fourth template, including the first language original text information of existing cards and the second language original text information (English) corresponding to the first language original text information. Then, the similarity between the first language original text information of the fourth template and the translation target original text information in the first language is calculated, and the first decomposed text information, second decomposed text information, or third decomposed text information is displayed together therewith.

Parts or all of the embodiments described above may also be described in the following notes, but are not limited to the following.

[Note 1] A translation system that translates the original text information in the first language displayed on a game medium associated with a character into a second language, comprising: a database storing a plurality of first templates that include first decomposed text information in the first language obtained by decomposing existing original text information in the first language into first unit and first decomposed text information in the second language corresponding to the first decomposed text information in the first language; an input means for inputting original text information in the first language to be translated; a translation means for decomposing the input original text information in the first language into first decomposed text information using the first unit, generating first decomposed text information in the first language, translating the first decomposed text information in the first language into first decomposed text information in the second language using the first template, combining the first decomposed text information in the second language, and generating translated text information in the second language corresponding to the original text information in the first language; an output control means for outputting the translated text information in the second language; a translation system comprising the above.

[Note 2] The translation system according to Note 1, wherein the first unit is a skill unit of the character information of the character.

[Note 3] The database includes a plurality of second templates that include second decomposed text information in the first language obtained by decomposing first decomposed text information in the first language into second unit and text information in the second language corresponding to the second decomposed text information in the first language; the translation means, when translation using the first template is not possible, decomposes the first decomposed text information in the first language into second decomposed text information using the second unit, generates the second decomposed text information in the first language, translates the second decomposed text information in the first language into second decomposed text information in the second language using the second template, combines the second decomposed text information in the second language, and generates translated text information in the second language corresponding to the original text information in the first language; the translation system according to Note 1 or Note 2.

[Note 4] In the translation system according to Note 3, the second unit is a paragraph unit of the first decomposed text information

[Note 5] In the aforementioned database, a plurality of third templates are stored, including third split text information in the first language, which is split by the third unit, and text information in the second language corresponding to the third split text information in the first language. When translation using the first template is not possible, the translation means splits the first split text information in the first language using the third unit to generate third split text information in the first language. It then translates the third split text information in the first language into third split text information in the second language using the third template, combines the third split text information in the second language, and generates translation text information in the second language corresponding to the original text information in the first language that is the subject of translation, as described in any of Notes 1 to 4.

[Note 6] The third unit is a punctuation unit of the first split text information, as described in Note 5.

[Note 7] The first template, the second template, and the third template include variables where predetermined strings or numbers are converted. The translation means converts the predetermined strings or numbers contained in the first split text information, the second split text information, and the third split text information in the first language into variables, and then performs translation using the first template, the second template, and the third template. After translation, it converts the variables in the translated text information in the second language into the corresponding predetermined strings or numbers in the second language, and generates translation text information in the second language corresponding to the original text information in the first language that is the subject of translation, as described in any of Notes 1 to 6.

[Note 8] The variables include at least one of character names, game media names, skill names, or numbers, as described in Note 7.

[Note 9] The translation means matches the first split text information, the second split text information, or the third split text information in the first language with the first template, the second template, or the third template, and uses the matched first template, the second template, or the third template's split text information in the second language as the translated text information of the first split text information, the second split text information, or the third split text information in the first language, as described in any of Notes 1 to 8.

[Note 10] The translation means generates translated text information in the second language that includes the untranslated text portions of the original text information in the first language that is the subject of translation, as described in any of Notes 1 to 9.

[Note 11] The translation system includes an editing unit capable of editing the output translated text information in the second language, as described in any of Notes 1 to 10.

[Note 12] The output means outputs the text information in the first language that is the subject of translation and the corresponding translated text information in the second language in a comparative format, as described in any of Notes 1 to 11.

[Note 13] The output control means outputs at least one of the following: whether all the original text information in the first language that is the subject of translation has been translated into the second language, whether only part of the original text information in the first language has been translated into the second language, or whether none of the original text information in the first language has been translated into the second language, as described in any of Notes 1 to 12.

[Note 14] The translation system includes an approval unit that approves the translated text information in the second language output by the output control means, as described in any of Notes 1 to 13.

[Note 15] The output control means outputs the translated text information in the second language in a format usable for services, conditional upon approval by the approval unit, as described in Note 14.

[Note 16] The translation system includes database updating means that, conditional upon approval by the approval unit, updates the database by modifying or newly creating the first template, the second template, or the third template using the approved translated text information in the second language and the corresponding original text information in the first language, as described in Notes 14 or 15.

[Note 17] The first template, the second template, or the third template is stored in the database for each type of game media, and the translation system includes selection means that allow the first template, the second template, or the third template used for translation to be selected by type, as described in any of Notes 1 to 16.

[Note 18] The translation system includes similar text search means that search for similar first split text information, second split text information, or third split text information in the first language to the original text information in the first language that is the subject of translation. It then presents the similar first split text information, second split text information, or third split text information in the first language, and the corresponding first split text information, second split text information, or third split text information in the second language, and the editing means controls the system so that the user can refer to the presented first split text information, second split text information, or third split text information in the first language, and the corresponding first split text information, second split text information, or third split text information in the second language, to edit the original text information in the first language that is the subject of translation or the translated text information in the second language, as described in any of Notes 11 to 17.

[Note 19] A translation apparatus for translating the original text information in the first language, displayed on the game media associated with the character, into the second language. The translation apparatus includes a database that stores a plurality of first templates, which include first split text information in the first language that is split by the first unit and first split text information in the second language corresponding to the first split text information in the first language. The translation apparatus also includes input means for inputting the original text information in the first language that is the subject of translation, translation means for splitting the input original text information in the first language using the first unit to generate first split text information in the first language, translating the first split text information in the first language into first split text information in the second language using the first template, combining the first split text information in the second language, and generating translated text information in the second language corresponding to the original text information in the first language that is the subject of translation, and output control means for outputting the translated text information in the second language.

[Note 20] A program for translating the original text information in the first language, displayed on the game media associated with the character, into the second language, causing a computer to function as: learning means for learning a plurality of first templates, which include first split text information in the first language that is split by the first unit and first split text information in the second language corresponding to the first split text information in the first language; input means for inputting the original text information in the first language that is the subject of translation; translation means for splitting the input original text information in the first language using the first unit to generate first split text information in the first language, translating the first split text information in the first language into first split text information in the second language using the first template, combining the first split text information in the second language, and generating translated text information in the second language corresponding to the original text information in the first language that is the subject of translation; and output control means for outputting the translated text information in the second language.

The present invention has been described by giving preferred embodiments, but the present invention is not necessarily limited to the above embodiments, and various modifications can be made and implemented within the scope of the technical idea.

### [Explanation of Symbols]

1: Translation apparatus
2: Database
10: Operation input unit
11: Display unit
12: Sound output unit
13: Communication unit
14: Processing unit
15: Storage unit
110: Selection control unit
111: Input control unit
112: Template creation unit
113: Translation unit
114: Output control unit
115: Editing control unit
116: Approval control unit
117: Database update unit

## Claims

1. A translation system, which translates first language original text information shown on a game medium associated with a character into a second language, comprising:
a database in which two or more first templates are stored, the two or more templates including first language first decomposed text information, which is obtained by decomposing existing first language original text information by a first unit, and second language first decomposed text information corresponding to the existing first language first decomposed text information;
an input unit configured to input the first language original text information to be translated;
a translation unit configured to decompose the input first language original text information by the first unit to generate the first language first decomposed text information, to translate the first language first decomposed text information into the second language first decomposed text information using the first template, to combine the second language first decomposed text information, and to generate second language translated text information corresponding to the first language original text information to be translated; and
an output control unit configured to output the second language translated text information.

2. The translation system according to claim 1, wherein the first unit is a skill unit of character information of the character.

3. The translation system according to either claim 1 or claim 2, wherein the database stores two or more second templates, which include first language second decomposed text information obtained by decomposing the first language first decomposed text information by a second unit, and second language text information, which corresponds to the first language second decomposed text information, and
when translation using the first template is not possible, the translation unit decomposes the first language first decomposed text information by the second unit, generates first language second decomposed text information, translates the first language second decomposed text information into second language second decomposed text information, using the second template, combines the second language second decomposed text information, and generates the second language translated text information corresponding to the original text information in the first language to be translated.

4. The translation system according to claim 3, wherein the second unit is a clause unit of the first decomposed text information.

5. The translation system according to any one of claims 1-4, wherein the database stores two or more second templates, which include first language third decomposed text information obtained by decomposing the first language first decomposed text information by a third unit, and second language text information, corresponding corresponds to the first language third decomposed text information, and
when translation using the first template is not possible, the translation unit decomposes the first language first decomposed text information by the second unit, generates first language third decomposed text information, translates the first language third decomposed text information into second language third decomposed text information, using the third template, combines the second language third decomposed text information, and generates the second language translated text information corresponding to the original text information in the first language to be translated.

6. The translation system according to claim 5, wherein the third unit is a punctuation unit of the first decomposed text information.

7. The translation system according to claim 5, wherein the first template, the second template and the third template respectively includes valuables to which a certain character string or numerical values are converted,
the translation unit performs a translation, using the third template, the second template, and the third template after converting, to the valuables, the certain character string or numerical values included in the first language first decomposed text information, the first language second decomposed text information, and the first language third decomposed text information, converts valuables included in the second language translated text information after the translation is completed, to the character string or numerical values corresponding to the second language, and generates the second language translated text information corresponding to the first language original text to be translated.

8. The translation system according to claim 7, wherein the valuables include at least one of character names, game medium names, skill names and numerical values.

9. The translation system according to any one of claims 1 - 8, wherein the translation unit matches the first divided text information, the second divided text information, or third divided text information of the first language with the first divided text information, the second divided text information, or the third divided text information of the first language in the first template, the second template, or the third template, and uses the second language first decomposed text information, the second language second decomposed text information, or the second language third decomposed text information in the matched first, second, or third template as the translation text information of the first language first decomposed text information, the first language second decomposed text information, or the first language third decomposed text information.

10. The translation system according to any one of claims 1-9, wherein the translation system generates second language translated text information including a first language text part which cannot be translated among pieces of the first language original text information to be translated.

11. The translation system according to any one of claims 1-10, further including an editing unit configured to edit the outputted second language translated text.

12. The translation system according to any one of claims 1-11, wherein the output unit outputs a comparative format of the first language text information, which is a translation target, and the translated text information in the second language corresponding to the text information in the first language.

13. The translation system according to any one of claims 1 - 12, wherein the output control unit outputs information as to whether all of the original text information in the first language has been translated into the second language, whether only part of the original text information in the first language has been translated, or whether none of the original text information in the first language has been translated.

14. The translation system according to any one of claims 1 - 13, further including an approval unit, which approves the second language translated text information outputted from the output control unit.

15. The translation system according to claim 14, wherein the output control unit outputs the second language translated text information in a format which is usable for a service, conditional upon an approval by the approval unit.

16. The translation system according to either claim 14 or claim 15, further including a database update unit, which corrects or newly generates the first, second, or third templates and updates the database, using the approved translated text information in the second language and the original text information in the first language which is a translation target, corresponding to the second language translated text information.

17. The translation system according to any one of claims 1 - 16, wherein the first, second or third template is stored in the database according to a type of a game medium, and the translation system includes a selection unit which is configured to select the first, second or third template to be used for translation, according to the type.

18. The translation system according to any one of claims 11 to 18, further including a similar text search unit which is configured to search the database for the first language decomposed text information, the first language second segmented text information, or the first language third decomposed text information, similar to the first language original text information to be translated, and to present the similar first language first decomposed text information, the similar first language second decomposed text information or the similar first language third decomposed text information, and the corresponding second language first decomposed text information, the corresponding second language second decomposed text information, or the corresponding second language third discomposed text information corresponding thereto,
wherein the editing unit is configured to allow the user to refer to the presented first language first decomposed text information, the presented first language second decomposed text information or the presented first language third decomposed text information, and the corresponding second language first decomposed text information, the corresponding second language second decomposed text information or the corresponding second language third decomposed text information, and to edit the first language original text information or the translated second language text information.

19. A translation apparatus, which translates first language original text information shown on a game medium associated with a character into a second language, comprising:
a database in which two or more first templates are stored, the two or more templates including first language first decomposed text information, which is obtained by decomposing existing first language original text by a first unit, and second language first decomposed text information corresponding to the exiting first language first decomposed text information;
an input unit configured to input the first language original text information to be translated;
a translation unit configured to decompose the input first language original text information by the first unit to generate the first language first decomposed text information, to translate the first language first decomposed text information into the second language first decomposed text information using the first template, to combine the second language first decomposed text information, and to generate second language translated text information corresponding to the first language original text information to be translated; and
an output control unit configured to output the second language translated text information.

20. A program for translating first language original text information shown on a game medium associated with a character, which is configured to causes a computer to perform functions as:
a learning unit configured to lean two or more first templates, which include first language first decomposed text information, which is obtained by decomposing existing first language original text by a first unit, and second language first decomposed text information corresponding to the exiting first language first decomposed text information;
an input unit configured to input the first language original text information to be translated;
a translation unit configured to decompose the input first language original text information by the first unit to generate the first language first decomposed text information, to translate the first language first decomposed text information into the second language first decomposed text information using the first template, to combine the second language first decomposed text information, and to generate second language translated text information corresponding to the first language original text information to be translated; and
an output control unit configured to output the second language translated text information.
